(19) Europäisches Patentamt
European Patent Office
Office européen des brevets

(11) EP 3 688 065 B1

(12) EUROPEAN PATENT SPECIFICATION

(45) Date of publication and mention of the grant of the patent:
**26.01.2022 Bulletin 2022/04**

(21) Application number: **18779652.9**

(22) Date of filing: **27.09.2018**

(51) International Patent Classification (IPC):
***C08G 69/26*** (2006.01) ***C08G 69/40*** (2006.01)
***C08L 77/06*** (2006.01) ***B29C 64/40*** (2017.01)

(52) Cooperative Patent Classification (CPC):
**C08L 77/06; B29C 64/40; C08G 69/26; C08G 69/40**

(86) International application number:
**PCT/EP2018/076366**

(87) International publication number:
**WO 2019/063741 (04.04.2019 Gazette 2019/14)**

(54) **METHOD FOR MANUFACTURING A THREE-DIMENSIONAL OBJECT USING DIMENSIONALLY STABLE AND WATER SOLUBLE POLYAMIDE SUPPORT MATERIAL**

VERFAHREN ZUR HERSTELLUNG EINES DREIDIMENSIONALEN OBJEKTES UNTER VERWENDUNG EINES FORMSTABILEN UND WASSERLÖSLICHEN POLYAMIDTRÄGERMATERIALS

PROCÉDÉ DE FABRICATION D'UN OBJET TRIDIMENSIONNEL À L'AIDE D'UN MATÉRIAU DE SUPPORT EN POLYAMIDE DIMENSIONNELLEMENT STABLE ET HYDROSOLUBLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.09.2017 US 201762564616 P**

(43) Date of publication of application:
**05.08.2020 Bulletin 2020/32**

(73) Proprietors:
- **Rhodia Operations**
  **93300 Aubervilliers (FR)**
- **Solvay Specialty Polymers USA, LLC**
  **Alpharetta, Georgia 30005-3914 (US)**

(72) Inventors:
- **MASTROIANNI, Sergio**
  **69006 Lyon (FR)**
- **JEOL, Stéphane**
  **Cumming**
  **GA 30041 (US)**
- **MICHON, Marie-Laure**
  **69100 Villeurbanne (FR)**
- **SINGLETARY, Nancy**
  **Alpharetta**
  **GA 30004 (US)**

(74) Representative: **Fiorucci, Hélène**
**Solvay S.A.**
**Rue de Ransbeek, 310**
**1120 Bruxelles (BE)**

(56) References cited:
**WO-A1-2015/175682**
**WO-A1-2016/191473**
**WO-A1-2017/112689**
**WO-A1-2017/167692**
**US-A- 5 324 812**
**US-A1- 2014 135 449**
**US-A1- 2016 122 541**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 688 065 B1

**Description**

Related Application

This application claims priority to U.S. provisional application No. 62/564,616 filed on September 28, 2017

Technical Field

The present disclosure relates to a method for manufacturing a three-dimensional object with an additive manufacturing system.

Background Art

Additive manufacturing systems are used to print or otherwise build 3D parts from digital representations of the 3D parts using one or more additive manufacturing techniques. Examples of commercially available additive manufacturing techniques include extrusion-based techniques, jetting, selective laser sintering, powder/binder jetting, electron-beam melting, and stereolithography processes. For each of these techniques, the digital representation of the 3D part is initially sliced into multiple horizontal layers. For each sliced layer, a tool path is then generated, which provides instructions for the particular additive manufacturing system to print the given layer.

For example, in an extrusion-based additive manufacturing system, a 3D part may be printed from a digital representation of the 3D part in a layer-by-layer manner by extruding a flowable part material. The part material is extruded through an extrusion tip carried by a print head of the system, and is deposited as a sequence of roads on a platen in an x-y plane. The extruded part material fuses to previously deposited part material, and solidifies upon a drop in temperature. The position of the print head relative to the substrate is then incremented along a z-axis (perpendicular to the x-y plane), and the process is then repeated to form a 3D part resembling the digital representation. An example of extrusion-based additive manufacturing system starting from filaments is called Fused Filament Fabrication (FFF) or Fused Deposition Modeling (FDM).

In fabricating 3D parts by depositing layers of a part material, supporting layers or structures are typically built underneath overhanging portions or in cavities of 3D parts under construction, which are not supported by the part material itself. A support structure may be built utilizing the same deposition techniques by which the part material is deposited. The host computer generates additional geometry acting as a support structure for the overhanging or free-space segments of the 3D part being formed, and in some cases, for the sidewalls of the 3D part being formed. The support material adheres to the part material during fabrication, and is removable from the completed 3D part when the printing process is complete.

Generally, soluble/leachable materials are used as support materials, enabling hence dissolving the support parts from the final 3D part, once the same is built, so that a soak and rinse post-processing is effective in recovering the part.

Within this scenario, WO-A-99/60508 (STRATASYS, INC.) discloses the use of poly(2-ethyl-2-oxazoline) (PEO) materials of formula:

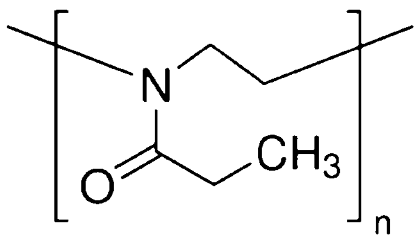

as support materials for a fused filament forming technique, including removal thereof through soaking and rinsing. These PEO materials may be compounded with polyethylene glycol plasticizers, and plasticized formulations maybe further formulated notably with polyamides, in amounts not exceeding 35 % by weight, the said polyamides being possibly Nylon 12, and amorphous copolymers of terephthalic acid, isophthalamide and hexamethylenediamine, amorphous Nylon 6/Nylon 12 copolymer, and the like.

Similarly, US-A-2015/0028523 (STRATASYS, INC.) discloses the use of a polyglycolic acid (PGA) support material for use in an additive manufacturing system, which can be removed by soaking in an aqueous medium. According to certain embodiment's, the PGA may comprise connected blocks of polyamide type, of aliphatic or aromatic type, in particular when to be used in association with polyamide part materials. <insert page 3a >

Nevertheless, choice of water-soluble polymers is relatively limited; water-soluble polymer compounds may be inadequate for supporting printing of certain polymers that require high processing temperatures, and in some cases soaking/rinsing detaching technique remains nevertheless quite burdensome, at least in that it requires post-treatment of significant amounts of waste waters, for disposal and/or recovering of water-soluble support polymer. In other cases, the use of soluble polymers as support material is the only way to generate hollow structures of the part material.

In fabricating 3D parts in association with part materials such as amorphous polymers having a glass transition temperature, as determined according to ASTM E1356, of from 100 to 180 °C, and semi-crystalline polymers having a melting point, as determined according to ASTM D3418, of from 100 °C to 260 °C and the like, support materials are required to provide vertical and/or lateral support in operating conditions required for the said part materials, and shall not soften too much under the operating conditions: deformation would otherwise render them ineffective as support structure materials.

Hence, there is a continuous quest for improved support materials simultaneously responding to the requirements for being used as support materials in additive manufacturing techniques, in particular in combination with part materials requiring processing temperatures up to 300 °C, and which can be easily removed from the 3D shaped parts via easy techniques.

Summary of invention

The present invention is directed to a method for manufacturing a three-dimensional object with an additive manufacturing system, such as an extrusion-based additive manufacturing system, a selective laser sintering system, and/or an electrophotography-based additive manufacturing system, WO 2017/112689 A1 (Stratasys) relates to a water soluble support material comprising a polymeric matrix, such polymeric matrix including a plurality of polyvinylpyrrolidone (PVP) polymer species.

comprising providing a support material comprising more than 50 % wt. of a well-chosen polyamide.

A first well-chosen polyamide is a semi-crystalline polyamide having a melting point ($T_m$), as determined according to ASTM D3418, of from 100 °C up to less than 250 °C, wherein the polyamide, when immersed in water at a concentration of 250 g/l, is soluble in water, is dispersed in water or is swollen by water with a water uptake at saturation of at least 25 % by weight, based on the initial weight of the polyamide.

Another well-chosen polyamide, which exhibits typically the properties of the above first polyamide, is a polyamide comprising from 60 mol. % to 100 mol. % of recurring units represented by formula (I), wherein formula (I) is as detailed hereinafter in the "Description of embodiments" part of the present document.

The method also includes providing a part material, printing layers of a support structure from the provided support material, and printing layers of the three-dimensional object from the provided part material in coordination with the printing of the layers of the support structure to provide an assembly of support structure and three-dimensional object, wherein at least a portion of the printed layers of the support structure support the printed layers of the three-dimensional object.

The method further includes removing at least a portion of the support structure from the assembly so as to obtain the three-dimensional object.

The use of a support material of the present invention enables printing part materials from engineering plastics requiring processing temperatures of up to 300°C, and provides for support parts undergoing, upon exposure to moisture, sufficient swelling, deformation or even complete dissolution, to enable effective and prompt detaching from the printed part.

Description of embodiments

In a first embodiment, the polyamide as per the present invention is semi-crystalline, i.e. it has a melting peak, as observed by differential scanning calorimetry (DSC). More precisely, this polyamide has a melting point ($T_m$), as determined according to ASTM D3418, of from 100 °C up to less than 250 °C. As herein used, "less than" should be understood under its common meaning, that is to say "strictly less than"; otherwise said, polyamides having a melting point of 250 °C or higher are not in accordance with the present invention. The polyamide as per the present invention has preferably a melting point ($T_m$), as determined according to ASTM D3418, of from 120 °C to 245 °C; more preferably, it has a melting point ($T_m$), as determined according to ASTM D3418, of from 150 °C to 230 °C. Besides, when immersed in water at a concentration of 250 g/l, the polyamide of the present embodiment is soluble in water, is dispersed in water or is swollen by water with a water uptake at saturation of at least 25 % by weight, based on the initial weight of the polyamide. Preferably, when immersed in water at a concentration of 250 g/l, the polyamide of the present embodiment is soluble in water or is dispersed in water. More preferably, when immersed in water at a concentration of 250 g/l, the polyamide of the present embodiment is soluble in water.

In another embodiment, which can be advantageously combined to the first one, the polyamide as per the

present invention comprises from 60 mol. % to 100 mol. % of recurring units represented by formula (I):

-- C(O)-A-C(O)-NH-X-NH- (I),

wherein

A represents a divalent hydrocarbon based group chosen from saturated or unsaturated aliphatics, saturated or unsaturated cycloaliphatics, aromatics comprising at least 5 carbon atoms, arylaliphatics and alkylaromatics, and

X represents a divalent group of, independently, at least one of formulae II, III, IV and V

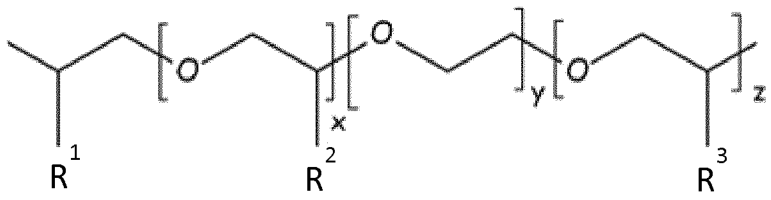

II

with $R^1$, $R^2$ and $R^3$, independently, being hydrogen, methyl, ethyl, ethenyl or ethinyl, x and z being zero or integers, and y being an integer, with the provisio that x+y+z is an integer of from 1 to 15;

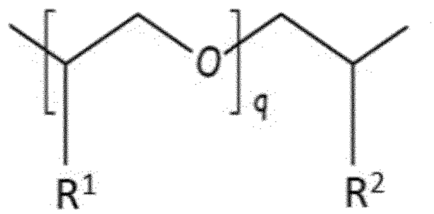

III

with $R^1$ and $R^2$, independently, being methyl, ethyl, ethenyl or ethinyl, and q being an integer of from 1 to 15;

$$- B' - O - [B'' - O -]_k - B''' -$$ IV

wherein B', B", and B‴ are identical or different from each other and represent a linear or branched alkylene group having from 2 to 6 carbon atoms, and k is from 0 to 3;

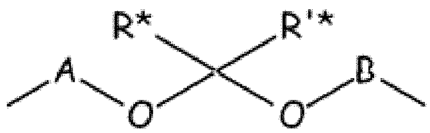

V

wherein R* and R'*, equal to or different from each other, are independently hydrogen, a $C_1$-$C_3$ alkyl group; A and B, independently, are alkanediyl, alkenediyl, alkdienediyl, alkanediyl-Het-alkanediyl, wherein Het represents a heteroatom other than oxygen, alkanediyl-heterocyclodiyl-alkanediyl, alkanediyl-oxy-alkanediyl, or 1,4- alkanediyl substituted piperazine.

Polyamides of the present invention comprise preferably from 80 mol. % to 100 mol. % of recurring units of formula (I), more preferably from 90 mol. % to 100 mol. % of recurring units of formula (I). Still more preferably, polyamides of the present invention have 100 mol. % of recurring of formula (I).

In a preferred embodiment, X represents a divalent group of at least one of formulae II, III or IV,

wherein x, y, z of formula II are identical to or different from each other, with x and z, independently, being zero, 1, 2 or 3, y being 1, 2 or 3, with the proviso that x+y+z is an integer of 1 to 5, and $R^1$, $R^2$ and $R^3$ of formula II , independently, are methyl or ethyl, or

wherein $R^1$ and $R^2$ of formula III, independently, are methyl or ethyl, and q is an integer of from 1 to 5, or

wherein each x of formula IV, equal to or different from each other, is an integer of from 1 to 4.

In an other preferred embodiment, $R^1$, $R^2$ and $R^3$ of formulae II and III are identical.
In a further preferred embodiment, X represents a divalent group of formula IV.
In a further preferred embodiment, X represents a divalent group of formula IV, and X is, independently, 2 or 3.
In a most preferred embodiment, X represents either of formulae VI to VIII

$$-(CH_2)_2-O-(CH_2)_2-O-(CH_2)_2- \quad (VI)$$

$$-(CH_2)_3-O-(CH_2)_2-O-(CH_2)_3- \quad (VII)$$

$$-(CH_2)_2-O-(CH_2)_2- \quad (VIII)$$

In another embodiment, A represents one or more of the group consisting of linear or branched alkanediyl groups, linear or branched alkenediyl groups, linear or branched alkynediyl groups, cycloalkanediyl groups, cycloalkenediyl groups, cycloalkynediyl groups, arylene groups comprising at least 5 carbon atoms, arylalkanediyl groups, arylcycloalkanediyl groups and alkylarylenediyl groups.
In a preferred embodiment, A represents a linear or branched alkylene group having from 1 to 10 carbon atoms.
In another embodiment, A represents a linear alkylene group having from 3 to 8 carbon atoms.
In a preferred embodiment, A represents a linear alkylene group having 4 carbon atoms.
Most preferred is employing in the method according to the present invention a polyamide wherein A represents a linear alkylene group having 4 carbon atoms and X represents the group of formula VI. Such polyamide is hereinafter referred to as "PA EDR-148,6".
The polyamide of the present invention is, for example, a condensation product of at least one mixture (M1) comprising at least a diacid [acid (DA)] (or derivative thereof) and at least a diamine [amine (NN)] (or derivatives thereof).
Acid (DA) derivatives include notably salts, anhydride, esters and acid halides, able to form amide groups; similarly, amine (NN) derivatives include notably salts thereof, equally able to form amide groups.
As disclosed above in the context of defining group A of formula (I), said acid (DA) can be selected from one or more of the group consisting of saturated and unsaturated aliphatic acid, saturated and unsaturated cycloaliphatic acid, aromatic acid comprising at least 5 carbon atoms, arylaliphatic acid and alkylaromatic acid, each thereof comprising two reactive carboxylic acid groups. For the purpose of the present invention, a dicarboxylic acid is considered as "aromatic" when it comprises one or more than one aromatic group.
Non limitative examples of aromatic, arylaliphatic and alkylaromatic acids are phthalic acids, including isophthalic acid (IA), and terephthalic acid (TA), 2,5-pyridinedicarboxylic acid, 2,4-pyridinedicarboxylic acid, 3,5-pyridinedicarboxylic acid, 2,2-bis(4-carboxyphenyl)propane, bis(4-carboxyphenyl)methane, 2,2-bis(4-carboxyphenyl)hexafluoropropane, 2,2-bis(4-carboxyphenyl)ketone, 4,4'-bis(4-carboxyphenyl)sulfone, 2,2-bis(3-carboxyphenyl)propane, bis(3-carboxyphenyl)methane, 2,2-bis(3-carboxyphenyl)hexafluoropropane, 2,2-bis(3-carboxyphenyl)ketone, bis(3-carboxyphenoxy)benzene, naphthalene dicarboxylic acids, including 2,6-naphthalene dicarboxylic acid, 2,7-naphthalene dicarboxylic acid,1,4-naphthalene dicarboxylic acid, 2,3-naphthalene dicarboxylic acid, 1,8-naphthalene dicarboxylic acid and biphenyl-4,4'-dicarboxylic acid.
Among aliphatic acids, mention can be notably made of oxalic acid (HOOC-COOH), malonic acid ($HOOC-CH_2-COOH$), succinic acid [$HOOC-(CH_2)_2-COOH$], glutaric acid [$HOOC-(CH_2)_3-COOH$], 2-methyl-glutaric acid [$HOOC-CH(CH_3)-(CH_2)_2-COOH$], 2,2-dimethyl-glutaric acid [$HOOC-C(CH_3)_2-(CH_2)_2-COOH$], adipic acid [$HOOC-(CH_2)_4-COOH$], 2,4,4-trimethyl-adipic acid [$HOOC-CH(CH_3)-CH_2-C(CH_3)_2-CH_2-COOH$], pimelic acid [$HOOC-(CH_2)_5-COOH$], suberic acid [$HOOC-(CH_2)_6-COOH$], azelaic acid [$HOOC-(CH_2)_7-COOH$], sebacic acid [$HOOC-(CH_2)_8-COOH$], undecanedioic acid [$HOOC-(CH_2)_9-COOH$], dodecandioic acid [$HOOC-(CH_2)_{10}-COOH$], tridecanedioic acid [$HOOC-(CH_2)_{11}-COOH$], tetradecandioic acid [$HOOC-(CH_2)_{12}-COOH$], octadecandioic acid [$HOOC-(CH_2)_{16}-COOH$].
Cycloaliphatic acids which can be used include cycloaliphatic-group containing acids, including notably 1,4-cyclohexane dicarboxylic acid, 1,3-cyclohexane dicarboxylic acids, as cis or trans diastereoisomers, possibly in admixture.
According to certain embodiments, acids (DA) comprising ionisable groups can be used [acids (IDA)] as polycondensation monomers of polyamide (A); among these ionisable groups, mention can be notably made of phenolic hydroxylic groups, sulfonic groups (generally aromatic sulfonic groups), phosphonic groups, onium goups (including phosphonium and ammonium groups) and the like. Non-limiting examples of acids (IDA) of this type which can be used within the frame of the present invention are notably 4-hydroxyisophthalic acid, 5-hydroxyisophthalic acid, 2-hydroxyterephthalic acid, 2,5-dihydroxyterephthalic acid, 4,6-dihydroxyisophthalic acid, 5-sulfoisophthalic acid (and salts thereof, e.g. Li, K, Na, Ag salts), and 2-sulfoterephthalic acid (and salts thereof, e.g. Li, K, Na, Ag salts).

Acids (IDA) including ionisable groups may be used in combination with aliphatic, cycloaliphatic, aromatic, arylaliphatic and alkylaromatic acids(DA), as above detailed.

In one embodiment, the method of present invention employs polyamide made from linear or branched aliphatic acids (DA) having from 3 to 8 carbon atoms wherein linear aliphatic acids (DA) are preferred.

In a preferred embodiment, the method of present invention employs polyamide made from linear aliphatic acids (DA) having from 4 to 7 carbon atoms.

In a most preferred embodiment, the method of present invention polyamide made from adipic acid.

As disclosed above in the context of defining group X of formula (I), the mixture (M1) comprises at least one diamine [amine (NN)] of the group

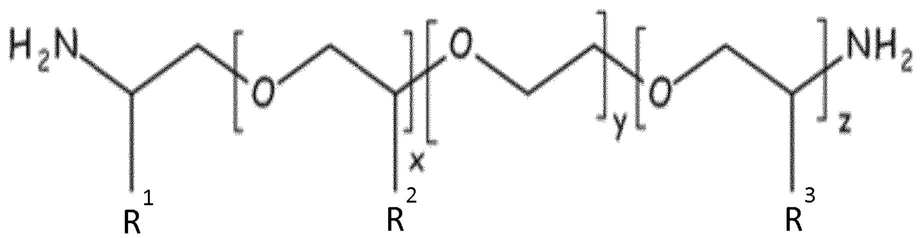

IX

with $R^1$, $R^2$ and $R^3$, independently, being hydrogen, methyl, ethyl, ethenyl or ethinyl, x and z being zero or integers, and y being an integer, with the provisio that x+y+z is an integer of from 1 to 15;

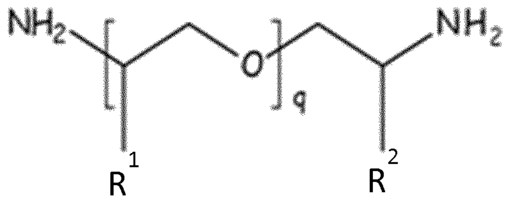

X

with $R^1$ and $R^2$, independently, being methyl, ethyl, ethenyl or ethinyl, and q being an integer of from 1 to 15;

$H_2N$- B' - O - [B" - O -]$_k$ - B'''-$NH_2$ XI

wherein B', B", and B''' are identical or different from each other and represent a linear or branched alkylene group having from 2 to 6 carbon atoms, and

k is from 0 to 3; amines (NN) of formula XI and corresponding polyamides are disclosed e.g. in US-A-5,324,812; amine (NN) of formula XI wherein k=1 and B', B", and B''' are CH2-CH2 is herein referred to as Jeffamine® EDR-148;

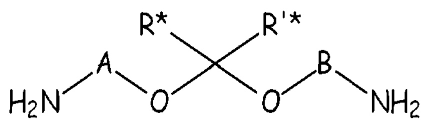

XII

wherein R* and R'*, equal to or different from each other, are independently hydrogen or a $C_1$-$C_3$ alkyl group; A and B, independently, are alkanediyl, alkenediyl, alkdienediyl, alkanediyl-Het-alkanediyl, wherein Het represents a heteroatom other than oxygen, alkanediyl-heterocyclodiyl-alkanediyl, alkanediyl-oxy-alkanediyl, or 1,4- alkanediyl substituted piperazine. Amines (NN) of formula XII are notably disclosed in WO-A-2013/007128. Generally, the molecular weight of amines (NN) of formulae IX - XII will be of at most 400, more preferably at least 200, even more preferably at most 150 g/mol. Amines (NN), as detailed above, are notably available under trade name Jeffamine® or Elastamine® from Huntsmann Chemicals. Specific examples thereof include notably 2,2'-oxydiethanamine, 2,2'-(ethylenedioxy)bis(ethylamine), and ethylene glycol bis(3-aminopropyl) ether.

In another embodiment, the mixture (M1) may comprise further amines (NNF) selected from the group consisting of aliphatic diamines, aromatic diamines and mixtures thereof.

Aliphatic amines (NNF) are typically aliphatic diamines having 2 to18 carbon atoms.

Said aliphatic diamine is advantageously selected from the group consisting of 1,2-diaminoethane, 1,2-diaminopropane, propylene-1,3-diamine, 1,3-diaminobutane, 1,4-diaminobutane, 1,5-diaminopentane, 1,5-diamino-2-methylpentane, 1,4-diamino-1,1 -dimethylbutane, 1,4-diamino-1-ethylbutane, 1,4-diamino-1,2-dimethylbutane, 1,4-diamino-1,3-dimethylbutane, 1,4-diamino-1,4-dimethylbutane, 1,4-diamino-2,3-dimethylbutane, 1,2-diamino-1-butylethane, 1,6-diaminohexane, 1,7-diaminoheptane, 1,8-diamino-octane, 1,6-diamino-2,5-dimethylhexane, 1,6-diamino-2,4-dimethylhexane, 1,6-diamino-3,3-dimethylhexane, 1,6-diamino-2,2-dimethylhexane, 1,9-diaminononane, 1,6-diamino-2,2,4-trimethylhexane, 1,6-diamino-2,4,4-trimethylhexane, 1,7-diamino-2,3-dimethylheptane, 1,7-diamino-2,4-dimethylheptane, 1,7-diamino-2,5-dimethylheptane, 1,7-diamino-2,2-dimethylheptane, 1,10-diaminodecane, 1,8-diamino-1,3-dimethyloctane, 1,8-diamino-1,4-dimethyloctane, 1.8-diamino-2,4-dimethyloctane, 1,8-diamino-3,4-dimethyloctane, 1.8-diamino-4,5-dimethyloctane, 1.8-diamino-2,2-dimethyloctane, 1.8-diamino-3,3-dimethyloctane, 1,8-diamino-4,4-dimethyloctane, 1,6-diamino-2,4-diethylhexane, 1,9-diamino-5-methylnonane, 1,11-diaminoundecane and 1,12-diaminododecane, 1,13-diaminotridecane, 2,5-bis(aminomethyl)tetrahydrofurane, N-methyl-bishexamethylene-triamine.

Aliphatic diamine preferably comprises at least one diamine selected from the group consisting of 1,4-diaminobutane, 1,5-diaminopentane, 1,5-diamino-2-methylpentane, 1,6-diaminohexane, 1,8-diamino-octane, 1,10-diaminodecane, and mixtures thereof. More preferably, the aliphatic alkylene diamine comprises at least one diamine selected from the group consisting of 1,4-diaminobutane, 1,5-diaminopentane, 1,6-diaminohexane and mixtures thereof. Even more preferably, the aliphatic alkylene diamine is 1,6-diaminohexane.

Aromatic diamine is preferably selected from the group consisting of meta-phenylene diamine, meta-xylylene diamine and para-xylylene diamine.

According to other embodiments, at least one of amine (NNF) is a cycloaliphatic diamine, i.e. a diamine comprising a cycloaliphatic group [amine (cNN)]; the amine (cNN) is generally selected from the group consisting of isophoronediamine, bis(3,5-dialkyl-4-aminocyclohexyl)methane, bis(3,5-dialkyl-4-aminocyclohexyl)ethane, bis(3,5-dialkyl-4-aminocyclohexyl) propane, bis(3,5- dialkyl-4-aminocyclohexyl) butane, bis(3-methyl-4-aminocyclohexyl)methane, p-bis(aminocyclohexyl)methane, isopropylidenedi(cyclohexylamine), 4,4'-diamino-3,3'-dimethyldicyclohexylmethane, and 1,4-diaminocyclohexane.

It is within the scope of the invention to add to mixture (M1) at least one polyfunctional acid/amine monomers comprising more that two carboxylic acid/amine groups, e.g. polycarboxylic acid having three or more carboxylic acid groups, polyamines having three or more amine groups. Incorporation of said polyfunctional acid/amine monomers generally lead to branched structures, star-like or tree-like, such as those described in WO-A- 97/24388 (NYLTECH ITALIA) and WO-A-99/64496 (NYLTECH ITALIA).

It is also further understood that one or more than one end capping agent [agent (M)] can be added to mixture (M1) for the manufacture of polyamide, without this departing from the scope of the invention. The agent (M) is generally selected from the group consisting of an acid comprising only one reactive carboxylic acid group [acid (MA)] and an amine comprising only one reactive amine group [agent (MN)].

Acid (MA) is preferably selected from the group consisting of acetic acid, propionic acid, butyric acid, valeric acid, caproic acid, caprylic acid, lauric acid, stearic acid, cyclohexanecarboxylic acid, benzoic acid, 3-sulfobenzoic acid (and salts thereof, e.g. Li, K, Na, Ag salts), 4-sulfobenzoic acid (and salts thereof, e.g. Li, K, Na, Ag salts), preferably from acetic acid and benzoic acid.

Amine (MN) is preferably selected from the group consisting of methylamine, ethylamine, butylamine, hexylamine, octylamine, benzylamine, aniline, toluidine.

One of ordinary skills in the art will advantageously select through routine experimentation mixtures (M1), as detailed above, which are such to provide a polyamide having suitable melting temperature and water affinity, i.e. a polyamide that is not softening too much under the processing conditions (under the action of heat) and that can be easily removed from the 3D shaped parts via easy techniques (under the action of water).

Preferred mixtures (M1) are selected from:

(a) mixtures comprising 2,2'-oxydiethanamine and adipic acid;,
(b) mixtures comprising 2,2'-(ethylenedioxy)bis(ethylamine) and adipic acid;
(c) mixtures comprising ethylene glycol bis(3-aminopropyl) ether and adipic acid;
(d) mixtures comprising 2,2'-oxydiethanamine and glutaric acid and pimelic acid;
(e) mixtures comprising 2,2'-(ethylenedioxy)bis(ethylamine) and glutaric acid and pimelic acid;
(f) mixtures comprising ethylene glycol bis(3-aminopropyl) ether and glutaric acid and pimelic acid.

According to certain embodiments, the support material of the invention comprises at least one water-soluble polymeric additive different from the polyamide. The choice of the polymeric additive is not particularly critical, provided that it has sufficient thermal stability to be admixed with the polyamide, and it is soluble in water, that is to say, possessing a solubility of at least 25 % in water at a temperature of below 100 °C under atmospheric pressure. Polyelectrolytes such as polyacids (and their salts) and polyamines (and their salts), as well as non-ionizable polymers possessing water

solubility can be advantageously used; this additive is generally selected from the group consisting of polyethyleneglycol (PEG) polymers; polyvinylpyrrolidone (PVP) polymers; polymethylenenaphthalene sulfonates (obtained by sulfonation of naphthalene, condensation with formaldehyde and neutralization) polymers; styrene sulfonate polymers having $-SO_3X_a$ groups, with $X_a$ being H or a metal, e.g. Na, K, Li, including polystyrene sulfonates and copolymers of styrene-co-styrene sulfonate; sulfonated sulfone polymers having $-SO_3X_a$ groups, with $X_a$ being H or a metal, including sulfonated polysulfones, sulfonated polyphenylsulfones, sulfonated polyethersulfones; polysuccinimides and salts; polyaspartic acids and salts; poly(meth)acrylic acids and salts (e.g. Na, K, Li); polyvinyl sulfonic acids and salts (e.g. Na, K, Li); polyvinylalcohols and the like.

When present, the said water soluble polymeric additive is added to the polyamide in the support material in an amount of at least 1 % by weight, preferably at least 2 % by weight, more preferably at least 5 % by weight and/or generally of at most 30 % by weight, preferably at most 25 % by weight, more preferably at most 20 % by weight with respect to the total weight of support material.

The support material of the invention may also include other additives different from the polyamide and the water soluble polymeric additives; these additives are selected from those generally known for polyamides, and include notably fillers, colorants, plasticizers, stabilizers, and combinations thereof.

In embodiments that include fillers, preferred concentrations of the fillers in the support material range from 1 % to 30 % by weight, with respect to the total weight of the support material. Suitable fillers include calcium carbonate, magnesium carbonate, glass fibers, graphite, carbon black, carbon fibers, talc, wollastonite, mica, alumina, silica, titanium dioxide, kaolin, silicon carbide, zirconium tungstate, and combinations thereof.

In certain embodiments, the support material of the present invention consists of:

- more than 50 %, up to 100 % by weight of polyamide, as above detailed;
- from 0 to 30 % by weight of water soluble polymeric additive, as above detailed; and
- from 0 to 30 % by weight of other additives,

with respect to the total weight of the support material.

Preferably, the support material of the present invention consists of:

- from 75 to 100 % by weight of polyamide, as above detailed;
- from 0 to 20 % by weight of water soluble polymeric additive, as above detailed; and
- from 0 to 20 % by weight of other additives, as above detailed,

with respect to the total weight of the support material.

The support material is advantageously soluble or dispersible in water; it is preferably soluble in water. Dispersible in water, for the purposes of the present invention, shall mean that the support material, including the polyamide, exhibits a certain water uptake as specified below, swells or loses its shape in the presence of water but stays suspended in water, and not form a homogeneous solution.

A polyamide or a support material comprising a polyamide, is referred to as soluble, when it will dissolve in water and become part of a homogeneous solution.

The water uptake of the support material at saturation, by immersion in water at 25 °C, is of at least 25 % by weight, preferably of at least 40 % by weight of the support material. This water uptake can be determined by providing a specimen of the support material shaped according to ISO527 in its dry state (moisture content of less than 0.2 % by weight), immersing the same in deionized water at 25 °C, until reaching a constant weight. The water uptake is calculated according to the formula:

$$\text{Water uptake} = \frac{W_{after} - W_{before}}{W_{before}} \times 100$$

wherein $W_{before}$ is the weight of the shaped specimen in its original dry state and $W_{after}$ is the weight of the shaped specimen after water uptake.

According to certain embodiments, the polyamide is a polyamide which at a temperature of below 100 °C under atmospheric pressure has a solubility in water of at least 25 % by weight, preferably 50 % by weight, and most preferably it is completely soluble in water.

Solubility of the polyamide of the present invention can be enhanced by employing mixtures of water and aliphatic alcohols (including notably methanol, ethanol, isopropanol, ethylene glycol) at a temperature of below 100 °C, under atmospheric pressure.

Pursuant to preferred embodiments, the polyamide of the support structure has a wide processing window of

at least 80 °C, preferably at least 100 °C, more preferably at least 130 °C. The term processing window for the puposes of the present invention is referred to as the difference $T_{deg}$1% minus $T_m$ , i.e. between the temperature ($T_{deg}$1%) at which 1 % weight loss occurs (employing a heating rate of 10 °C/min) and the melting temperature $T_m$ (as determined according to ASTM D3418). Polyamides having a wide processing window are particularly useful for fused filament fabrication (FFF) to be employed as support materials in 3D printing.

The support material of the present invention is used to print support structures in additive manufacturing systems, such as extrusion-based additive manufacturing systems, and jetting-based additive manufacturing.

The support material is provided generally in a dry state; to this aim, the support material is generally dried prior to being delivered to and used in the additive manufacturing system.

As such, the support material provided to the additive manufacturing system preferably has a moisture content of less than 0.5 % by weight, preferably of less than 0.2 % by weight, with respect to the total weight of the support material. A preliminary drying step may be required to achieve this low moisture content by heating between 60 to 200 °C the support material at atmospheric temperature (under air or nitrogen) or under vacuum for the desired amount of time

The part material provided in the method of the present invention is generally a material requiring a processing temperature of at most 300 °C. The term processing temperature for the purposes of the present invention is referred to as the temperature of the nozzle of the printer. Part materials which are generally associated in the method of the invention to the support material, as above detailed, are selected from the group consisting of amorphous polymers having a glass transition temperature, as determined according to ASTM E1356, of from 100 to 180 °C, and semi-crystalline polymers having a melting point, as determined according to ASTM D3418, of from 100 °C to 260 °C.

The limitation of the part material's processing temperature serves to avoid softening of the support material under the part material's processing conditions. Deformation would render them ineffective as support structure materials.

More specifically, the part material is selected from the group comprising polymethyl methacrylate (PMMA), polycarbonate (PC), acrylonitrile butadiene styrene (ABS), polyamides, including notably polyamide 6, polyamide 11, polyamide 610, polyamide 612, polyamide 510, polyamide 1010, polyamide 1012, polyamide 1212, polyamide MXD6, polyamide 66, polyamide 106, polyamide 12 and their copolyamides, polyester, including notably polybutylene terephthalate (PBT), polytrimethylene terephthalate (PTT), polyethylene terephthalate (PET), polylactic acid (PLA), polyolefins, notably polyethylene (PE) and polypropylene (PP), polyvinylidene fluoride (PVDF), polyetherimide (PEI) thermoplastic elastomers (TPE), thermoplastic polyurethane (TPU), and the like.

Generally, the step of printing layers of the three-dimensional object from the part material is hence carried out printing part material in the molten state at a temperature of at most 300°C.

According to certain preferred embodiments, the method of the invention is a method for manufacturing a three-dimensional object with an extrusion-based additive manufacturing system, otherwise known also as fused filament fabrication technique.

The support material, according to these embodiments, is provided under the form of a filament. The filament may have a cylindrical or substantially cylindrical geometry, or may have a non-cylindrical geometry, such as a ribbon filament geometry; further, filament may have a hollow geometry, or may have a core-shell geometry, with the support material of the present invention being used to form either the core or the shell.

Yet, the support material, according to these embodiments may be also provided in powder form, e.g. for being fed through an auger-pump print head.

When the method is an extrusion-based additive manufacturing system, the step of printing layers of a support structure from the provided support material comprises :

a) feeding the support material to a discharge head member having a throughbore ending with a discharge tip, and a circumferential heater to melt the material in the throughbore;
b) compressing the support material with a piston, for example with the unmelted filament acting as a piston, in said throughbore, while simultaneously melting the support material in the discharge head member, so as to extrude a ribbon of support material from the discharge tip; and
c) ensuring relative movement in x and y directions of the discharge tip and of a receiving platform while discharging support material on said receiving platform to form the cross sectional shape of the support structure; and
d) ensuring relative movement in the z direction of the discharge tip and the receiving platform while discharging support material on said receiving platform to form the support structure in elevation.

According to these embodiments, the step of printing layers of the three-dimensional object from the provided part material in coordination with the printing of the layers of the support structure, advantageously further comprises:

a') feeding the part material to a discharge head member having a throughbore ending with a discharge tip, and a circumferential heater to melt the material in the throughbore;
b') compressing the part material with a piston, for example with the unmelted filament acting as a piston, in said

throughbore, while simultaneously melting the part material in the discharge head member, so as to extrude a ribbon of part material from the discharge tip; and
c) ensuring relative movement in x and y directions of the discharge tip and the receiving platform bearing the support structure, while discharging support material on said receiving platform and said support structure to form the cross sectional shape of the three-dimensional object, and
d) ensuring relative movement in the z direction of the discharge tip and the receiving platform while discharging part material on said receiving platform and said support structure, to form the three-dimensional object in elevation.

The method of the invention upon removing at least a portion of the support structure from the assembly so as to obtain the three-dimensional object may further involve exposing the assembly to water vapour and/or to water.
When exposing to water in the liquid state, pure water can be used. Nevertheless, exposure to water solutions acidified or basified through the addition of acid(s) or base(s), to water mixtures with polar protic solvents (e.g. ethanol, isopropanol, ethylene glycol); to water solutions comprising electrolytes (e.g. sodium chloride, lithium chloride) can be used. Generally water is present in the liquid medium used for this exposure in a concentration of at least 30 % wt, preferably at least 50% wt.
This exposure can be realized in any manner.
According to certain embodiments the step of removing at least a portion of the support structure from the assembly so as to obtain the three-dimensional object includes exposing the assembly to moist air, e.g. to air possessing a relative humidity (RH) of at least 70 %, preferably at least 80 %, preferably at least 85 %, at the temperature of exposure. This exposure to moist air can be effected at room temperature (i.e. at about 20 - 25 °C), but it is generally preferred to expose the assembly to moist air at a temperature of at least 50°C, preferably of at least 60°C and/or generally at a temperature of at most 90°C, preferably of at most 80°C.
According to other embodiments, the step of removing at least a portion of the support structure from the assembly so as to obtain the three-dimensional object includes contacting/immersing the assembly with/in water (i.e. liquid water). In this case, the water temperature for the immersing/contacting is generally about room temperature, i.e. temperatures of from 20 to 25 °C, although higher temperatures may equally be used, up to about 100 °C.
The duration of exposure to water vapour and/or to water is not particularly limited, and exposure times of at least 1 hour may be effective.
It is nevertheless understood that when the step of removing at least a portion of the support structure from the assembly so as to obtain the three-dimensional object comprises exposing the assembly to moist air, duration of exposure is preferably of at least 24 hours, preferably 30 hours.
As an outcome of the step of removing at least a portion of the support structure from the assembly so as to obtain the three-dimensional object, the support structure is removed from the assembly; the said support structure can be advantageously detached from the three-dimensional object and removed in its solid form. Nevertheless, for embodiment's wherein use is made of a polyamide soluble in water, as above detailed, the removal of the support structure can be achieved through at least partial solubilization in water.

EXAMPLES

Testing

Melting point ($T_m$), glass transition temperature ($T_g$) and crystallization temperature ($T_c$) of polymers, esp. polyamides, are determined by differential scanning calorimetry (DSC), using a Perkin Elmer Pyris 1 instrument, at a rate of 10 °C/min after removal of the thermal history of the sample at 250 °C.
Thermogravimetric analysis (TGA) is carried out on a Perkin-Elmer TGA4000 instrument on samples of around 10 mg, by heating at 10 °C/min under a flow of nitrogen up to 600 °C.
The number average molecular weight $M_n$ (expressed in g/mol) is calculated by the equation $M_n$ =2,000,000/(sum of end groups concentrations). The end groups, amine end groups (AEG) and carboxylic acid end groups (CEG), of polyamides are determined by potentiometric titration and expressed in meq/kg. The number average molecular weight is then determined by the equation $M_n$ = 2,000,000/(AEG+CEG), and expressed in g/mol.
Affinity for water (solubility / dispersibility / swellability in water) : Before the test, polyamides are dried for 2 hours at 160 °C under vacuum. This thermal process (thermal annealing) allows further for the full crystallization of semi-crystalline polyamides. 0.5 g of polyamide is placed in a vial and deionized water is introduced to reach a concentration of polyamide of 250 g/l. The mixture is then placed at at least one temperature in the range of from 10°C to 100°C (for example, at 25 °C or 80°C) for a given time under stirring, which time may be equal to 20 min, 35 min, 1 h, 5 h or 24 h. The observed behavior of the polyamide is characterized as : soluble in water (S), dispersed in water (D), swollen by water (SW) or non-soluble in water (NS). When the polyamide is swollen by water, its water uptake is calculated using the formula

$$(W_{final}-W_{initial})/W_{initial}$$

wherein :

wherein $W_{initial}$ is the weight of the polyamide in its original dry state (after thermal annealing, before immersion) and $W_{final}$ is the weight of the polyamide after immersion.

Obtained results are collected in Tables 1 and 2.

FIRST SET OF EXAMPLES

Raw Materials

A1. adipic acid (Rhodiacid® AA) having a melting point ($T_m$) of 152 °C from Solvay.
A2. polyether diamine $H_2N-(CH_2)_2-O-(CH_2)_2-O-(CH_2)_2-NH_2$ (Jeffamine® EDR-148) from Huntsman Corp.

Synthesis of polyamide PA EDR-148,6

1.80 g (0.012 mol) of adipic acid and 1.80 g (0.012 mol) of Jeffamine® EDR-148 are placed in a small polymerization reactor. The reaction mixture is stirred under a constant flow of nitrogen and heated to 250 °C within 1 h and maintained at 250 °C for 1 h. At the end of the polymerization reaction, the reactor is cooled down to room temperature. The solid white (crystallized) polymer is removed from the reactor.

Tests on polyamide PA EDR-148,6

Polyamide PA EDR-148,6 has a $T_g$ of 17 °C, $T_c$ of 157 °C and $T_m$ of 187 °C. Thermal analysis by TGA indicates a very good thermal stability with only 1 % weight loss at 296 °C ($T_{deg}$1% of 296 °C) which provides a large processing window in the melt (difference between $T_{deg}$1% and $T_m$ of 109 °C) and hence provides a good opportunity to generate filaments from polyamide PA EDR-148,6 using a melt extrusion process.

Table 1

| Water affinity data | | | |
|---|---|---|---|
| | 50 g/L | 100 g/L | 250 g/L |
| PA EDR-148,6 | 25 °C : S (20 min) | 25 °C : S (20 min) | 25 °C : S (35min) |

PA EDR-148,6 has a wide processing window allowing the generation of filaments to be used as a support material for amorphous polymers having a glass transition temperature of from 100 to 180 °C and semi-crystalline polymers having a melting point ($T_m$) of from 100 °C to 260 °C. PA EDR-148,6 quickly dissolves in water. This makes it suitable for 3D printing applications, especially as support material for fused filament fabrication (FFF).

SECOND SET OF EXAMPLES

Raw Materials

A1. adipic acid (Rhodiacid® AA) having a melting point of 152 °C from Solvay.
A2. 2,5-bis(aminomethyl)tetrahydrofurane (THFDA) was synthesized as disclosed in WO 2013/007585 A1

Synthesis of polyamide PA THF6

56.15 g (0.384 mol) of adipic acid, 50.66 g (0.389 mol) of 2,5-bis(aminomethyl)tetrahydrofurane (THFDA), 0.13 g of sodium hypophosphite, 96 g of deionized water and 0.94 g of an antifoaming agent are placed in a a polymerization reactor. After introduction of the reactants, the reactor is purged 4 times with nitrogen, closed and agitation started. The pressure release valve is set at 18.5 bar. The reactor is heated under a pressure of 18.5 bar until the temperature of the

reaction medium reaches 240 °C (indiated by distillation of water). Subsequently, the reactor is decompressed down to a vacuum of 0.17 bar accompanied by heating of the reaction medium to 260 °C. The reaction mixture is then maintained at 0.17 bar, 260 °C for 20 min. At the end of the polymerization reaction, the polymer melt is extruded from the reactor (under nitrogen pressure).

Tests on polyamide PA THF6

Polyamide PA THF6 has a $T_g$ of 68 °C, $T_c$ of 158 °C and $T_m$ of 202 °C. The thermal analyses by TGA indicates a very good thermal stability with only 1% weight loss at 316 °C ($T_{deg}$1%=316 °C), which provides a large processing window in the melt (difference between $T_{deg}$1% and $T_m$ of 114 °C, which is large compared to the narrow (30 °C) processing window of polyglycolic acid (PGA)) and hence provides a good opportunity to generate filaments from polyamide PA THF6 using a melt extrusion process.

Table 2

| Water affinity data | | | |
|---|---|---|---|
| | 50 g/L | 100 g/L | 250 g/L |
| PA THF6 | 25 °C : SW (5h)<br>80 °C : D (1h) | 25 °C : SW (5h)<br>80 °C : D (1h) | 25 °C : SW (5h)<br>80 °C : D (1h) |

PA THF6 has a wide processing window allowing the generation of filaments to be used as a support material for amorphous polymers having a glass transition temperature of from 100 to 180 °C and semi-crystalline polymers having a melting point of from 100 °C to 260 °C. PA THF6 quickly disperses, and at elevated temperatures even dissolves in water which makes it suitable for 3D printing applications, especially as support material for fused filament fabrication (FFF).

## Claims

**1.** A method for manufacturing a three-dimensional object with an additive manufacturing system, comprising:

- providing a support material comprising more than 50 % wt. of at least one semi-crystalline polyamide having a melting point ($T_m$), as determined according to ASTM D3418, of from 100 °C up to less than 250 °C, wherein the polyamide, when immersed in water at a concentration of 250 g/l, is soluble in water, is dispersed in water or is swollen by water with a water uptake at saturation of at least 25 % by weight, based on the initial weight of the polyamide;
- providing a part material;
- printing layers of a support structure from the provided support material, and printing layers of the three-dimensional object from the provided part material in coordination with the printing of the layers of the support structure to provide an assembly of support structure and three-dimensional object, wherein at least a portion of the printed layers of the support structure support the printed layers of the three-dimensional object; and
- removing at least a portion of the support structure from the assembly so as to obtain the three-dimensional object.

**2.** The method of claim 1, wherein the polyamide comprises from 60 mol. % to 100 mol. % of recurring units represented by formula (I):

-- C(O)-A-C(O)-NH-X-NH- (I),

wherein

A represents a divalent hydrocarbon based group chosen from at least one of saturated or unsaturated aliphatics, saturated or unsaturated cycloaliphatics, aromatics comprising at least 5 carbon atoms, arylaliphatics and alkylaromatics, and
X represents, independently, a divalent group at least one of formulae II, III, IV and V

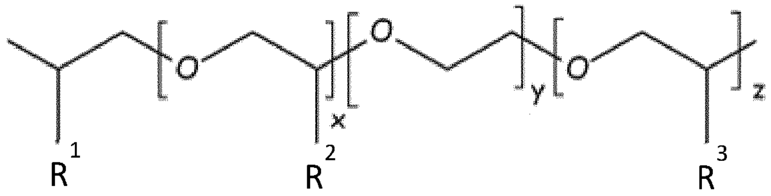

II

l or ethinyl, x and z being zero or integers, and y being an integer, with the provisio that x+y+z is an integer of from 1 to 15;

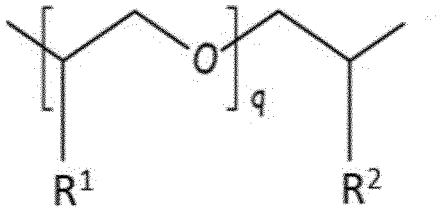

III

with $R^1$ and $R^2$, independently, being methyl, ethyl, ethenyl or ethinyl, and q being an integer of from 1 to 15;

$$-B' - O - [B'' - O -]_k - B''' - \quad \text{IV}$$

wherein B', B", and B‴ are identical or different from each other and represent a linear or branched alkylene group having from 2 to 6 carbon atoms, and
k is from 0 to 3;

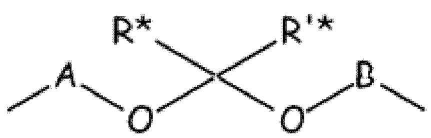

V

wherein R* and R'*, equal to or different from each other, are independently hydrogen, a $C_1$-$C_3$ alkyl group; A and B, independently, are alkanediyl, alkenediyl, alkdienediyl, alkanediyl-Het-alkanediyl, wherein Het represents a heteroatom other than oxygen, alkanediyl-heterocyclodiyl-alkanediyl, alkanediyl-oxy-alkanediyl, or 1,4- alkanediyl substituted piperazine.

**3.** The method of claim 2, wherein X represents a divalent group of at least one of formulae II, III or IV,

wherein x, y, z of formula II are identical to or different from each other, with x and z, independently, being zero, 1, 2 or 3, y being 1, 2 or 3, with the proviso that x+y+z is an integer of 1 to 5, and $R^1$, $R^2$ and $R^3$ of formula II , independently, are methyl or ethyl, or
wherein $R^1$ and $R^2$ of formula III, independently, are methyl or ethyl, and q is an integer of from 1 to 5, or
wherein B', B", and B‴ are identical or different from each other and represent a linear alkylene group having from 2 to 4 carbon atoms, and k is from 0 to 2

**4.** The method of claim 2 or 3, wherein X represents a divalent group of formula IV, wherein B', B", and B‴ represent linear alkylene groups having, independently, 2 or 3 carbon atoms, and k is 0 or 1.

**5.** The method of any of claims 2 to 4, wherein X represents either of formulae VI to VIII

$$- (CH_2)_2 - O - (CH_2)_2 - O - (CH_2)_2 - \quad \text{(VI)}$$

$$- (CH_2)_3 - O - (CH_2)_2 - O - (CH_2)_3 - \quad \text{(VII)}$$

$$- (CH_2)_2 - O - (CH_2)_2 - \quad \text{(VIII).}$$

6. The method of any of claims 2 to 5 , wherein A represents one or more of the group consisting of linear or branched alkanediyl groups, linear or branched alkenediyl groups, linear or branched alkynediyl groups, cycloalkanediyl groups, cycloalkenediyl groups, cycloalkynediyl groups, arylene groups comprising at least 5 carbon atoms, arylalkanediyl groups, arylcycloalkanediyl groups and alkylarylenediyl groups.

7. The method of any of claims 2 to 6, wherein A represents a linear or branched alkylene group having from 1 to 10 carbon atoms.

8. The method of any of claims 2 to 7, wherein A represents a linear alkylene group having 4 carbon atoms and X represents the group of formula VI.

9. The method of any of the preceding claims, wherein the polyamide is a condensation product of at least one mixture comprising at least a diacid [acid (DA)] (or derivative thereof) and at least a diamine [amine (NN)] (or derivatives thereof).

10. The method of any of the preceding claims, wherein the support material comprises at least one water-soluble polymeric additive different from the polyamide, which is generally selected from the group consisting of polyethyleneglycol (PEG) polymers; polyvinylpyrrolidone (PVP) polymers; polymethylenenaphthalene sulfonates (obtained by sulfonation of naphthalene, condensation with formaldehyde and neutralization) polymers; styrene sulfonate polymers having $-SO_3X_a$ groups, with $X_a$ being H or a metal, e.g. Na, K, Li, including polystyrene sulfonates and copolymers of styrene-co-styrene sulfonate; sulfonated sulfone polymers having $-SO_3X_a$ groups, with $X_a$ being H or a metal, including sulfonated polysulfones, sulfonated polyphenylsulfones, sulfonated polyethersulfones; polysuccinimides and salts; polyaspartic acids and salts; poly(meth)acrylic acids and salts (e.g. Na, K, Li); polyvinyl sulfonic acids and salts (e.g. Na, K, Li); and polyvinylalcohols.

11. The method of any of the preceding claims, wherein the support material is provided in a dry state, having a moisture content of less than 0.5 % by weight, preferably of less than 0.2 % by weight, based on the total weight of the support material.

12. The method of any of the preceding claims, wherein the step of printing layers of the three-dimensional object from the part material is carried out by printing part material at a temperature of at most 300 °C.

13. The method of any of the preceding claims, wherein the part material is selected from the group consisting of amorphous polymers having a glass transition temperature, as determined according to ASTM E1356, of from 100 to 180 °C, and semi-crystalline polymers having a melting point, as determined according to ASTM D3418, of from 100 °C to 260 °C.

14. The method of any of the preceding claims, wherein the part material is selected from the group comprising polymethyl methacrylate (PMMA), polycarbonate (PC), acrylonitrile butadiene styrene (ABS), polyamides, including notably polyamide 6, polyamide 11, polyamide 610, polyamide 612, polyamide 510, polyamide 1010, polyamide 1012, polyamide 1212, polyamide MXD6, polyamide 66, polyamide 106, polyamide 12 and their copolyamides, polyester, including notably polybutylene terephthalate (PBT), polytrimethylene terephthalate (PTT), polyethylene terephthalate (PET), polylactic acid (PLA), polyolefins, including notable polyethylene (PE) and polypropylene (PP), polyvinylidene fluoride (PVDF), polyetherimide (PEI) thermoplastic elastomers (TPE) and thermoplastic polyurethane (TPU).

15. The method of any of the preceding claims, wherein the additive manufacturing system is an extrusion-based additive manufacturing system, otherwise known also as fused filament fabrication technique.

**Patentansprüche**

1. Verfahren zur Herstellung eines dreidimensionalen Gegenstands durch ein additives Fertigungssystem, umfassend:

- Bereitstellen eines Trägermaterials, das mehr als 50 Gew.-% an wenigstens einem halbkristallinen Polyamid mit einem Schmelzpunkt ($T_m$), wie bestimmt gemäß ASTM D3418, von 100 °C bis weniger als 250 °C umfasst, wobei das Polyamid, wenn mit einer Konzentration von 250 g/l in Wasser eingetaucht, in Wasser löslich ist, in Wasser dispergiert wird oder mit einer Wasseraufnahme bei Sättigung von wenigstens 25 Gew.-%, bezogen

auf das Ausgangsgewicht des Polyamids, mit Wasser quillt;
- Bereitstellen eines Bauteilmaterials;
- Drucken von Schichten einer Trägerstruktur aus dem bereitgestellten Trägermaterial und Drucken von Schichten des dreidimensionalen Gegenstands aus dem bereitgestellten Bauteilmaterial koordiniert mit dem Drucken der Schichten der Trägerstruktur, um eine Baugruppe von Trägerstruktur und dreidimensionalem Gegenstand bereitzustellen, wobei wenigstens ein Teil der gedruckten Schichten der Trägerstruktur die gedruckten Schichten des dreidimensionalen Gegenstands trägt; und
- Entfernen wenigstens eines Teils der Trägerstruktur von der Baugruppe, um den dreidimensionalen Gegenstand zu erhalten.

**2.** Verfahren gemäß Anspruch 1, wobei das Polyamid von 60 mol-% bis 100 mol-% Wiederholungseinheiten umfasst, die von Formel (I) dargestellt werden:

-C(O)-A-C(O)-NH-X-NH- (I),

wobei

A eine zweiwertige Gruppe auf Kohlenwasserstoffbasis ausgewählt aus wenigstens einem von gesättigten oder ungesättigten Aliphaten, gesättigten oder ungesättigten Cycloaliphaten, Aromaten, die wenigstens 5 Kohlenstoffatome umfassen, Arylaliphaten und Alkylaromaten darstellt, und
X unabhängig eine zweiwertige Gruppe mit wenigstens einer der Formeln II, III, IV und V darstellt,

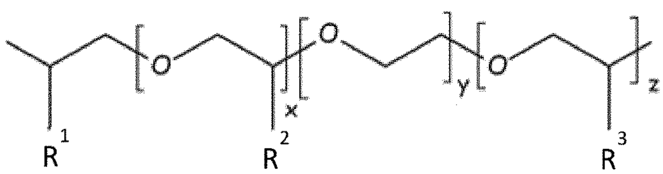
II

I oder Ethinyl, x und z null oder ganze Zahlen sind und y eine ganze Zahl ist, mit der Maßgabe, dass x + y + z eine ganze Zahl von 1 bis 15 ist;

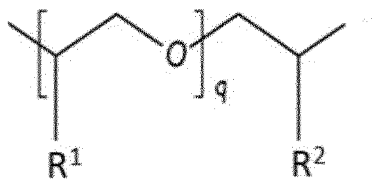
III

wobei $R^1$ und $R^2$ unabhängig Methyl, Ethyl, Ethenyl oder Ethinyl sind und q eine ganze Zahl von 1 bis 15 ist;

$- B' - O - [B'' - O -]_k - B''' -$ IV

wobei B', B" und B‴ gleich oder voneinander verschieden sind und eine lineare oder verzweigte Alkylengruppe mit von 2 bis 6 Kohlenstoffatomen darstellen und k von 0 bis
3 beträgt;

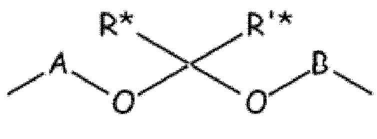
V

wobei R* und R'*, gleich oder voneinander verschieden, unabhängig Wasserstoff, eine $C_1$-$C_3$-Akylgruppe sind; A und B unabhängig Alkandiyl, Alkendiyl, Alkdiendiyl, Alkandiyl-Het-Alkandiyl, wobei Het ein von Sauerstoff verschiedenes Heteroatom darstellt, Alkandiyl-Heterocyclodiyl-Alkandiyl, Alkandiyl-Oxy-Alkandiyl oder 1,4-Alkandiyl-substituiertes Piperazin sind.

3. Verfahren gemäß Anspruch 2, wobei X eine zweiwertige Gruppe mit wenigstens einer der Formeln II, III oder IV darstellt,

wobei x, y, z der Formel II identisch oder voneinander verschieden sind, wobei x und z unabhängig null, 1, 2 oder 3 sind, y 1, 2 oder 3 ist, mit der Maßgabe, dass x + y + z eine ganze Zahl von 1 bis 5 ist, und $R^1$, $R^2$ und $R^3$ der Formel II unabhängig Methyl oder Ethyl sind, oder
wobei $R^1$ und $R^2$ der Formel III unabhängig Methyl oder Ethyl sind und q eine ganze Zahl von 1 bis 5 ist, oder
wobei B', B" und B‴ gleich oder voneinander verschieden sind und eine lineare Alkylengruppe mit von 2 bis 4 Kohlenstoffatomen darstellen und k von 0 bis 2 beträgt.

4. Verfahren gemäß Anspruch 2 oder 3, wobei X eine zweiwertige Gruppe der Formel IV darstellt, wobei B', B" und B"' lineare Alkylengruppen darstellen, die unabhängig 2 oder 3 Kohlenstoffatome aufweisen, und k 0 oder 1 ist.

5. Verfahren gemäß einem der Ansprüche 2 bis 4, wobei X eine der Formeln VI bis VIII darstellt,

$-(CH_2)_2-O-(CH_2)_2-O-(CH_2)_2-$ (VI)

$-(CH_2)_3-O-(CH_2)_2-O-(CH_2)_3-$ (VII)

$-(CH_2)_2-O-(CH_2)_2-$ (VIII).

6. Verfahren gemäß einem der Ansprüche 2 bis 5, wobei A eines oder mehrere aus der Gruppe bestehend aus linearen oder verzweigten Alkandiylgruppen, linearen oder verzweigten Alkendiylgruppen, linearen oder verzweigten Alkindiylgruppen, Cycloalkandiylgruppen, Cycloalkendiylgruppen, Cycloalkindiylgruppen, Arylengruppen, die wenigstens 5 Kohlenstoffatome umfassen, Arylalkandiylgruppen, Arylcycloalkandiylgruppen und Alkylarylendiylgruppen darstellt.

7. Verfahren gemäß einem der Ansprüche 2 bis 6, wobei A eine lineare oder verzweigte Alkylengruppe mit von 1 bis 10 Kohlenstoffatomen darstellt.

8. Verfahren gemäß einem der Ansprüche 2 bis 7, wobei A eine lineare Alkylengruppe mit 4 Kohlenstoffatomen darstellt und X die Gruppe der Formel VI darstellt.

9. Verfahren gemäß einem der vorstehenden Ansprüche, wobei das Polyamid ein Kondensationsprodukt von wenigstens einem Gemisch ist, das wenigstens eine Disäure [Säure (DA)] (oder Derivat davon) und wenigstens ein Diamin [Amin (NN)] (oder Derivate davon) umfasst.

10. Verfahren gemäß einem der vorstehenden Ansprüche, wobei das Trägermaterial wenigstens einen wasserlöslichen polymeren Zusatzstoff, der von dem Polyamid verschieden ist, umfasst, der allgemein ausgewählt ist aus der Gruppe bestehend aus Polyethylenglycol(PEG)-Polymeren; Polyvinylpyrrolidon(PVP)-Polymeren; Polymethylennaphthalinsulfonat-Polymer (erhalten durch Sulfonierung von Naphthalin, Kondensation mit Formaldehyd und Neutralisation); Styrolsulfonatpolymeren mit $-SO_3X_a$-Gruppen, wobei $X_a$ H oder ein Metall ist, z. B. Na, K, Li, einschließlich Polystyrolsulfonaten und Copolymeren von Styrol-co-Styrolsulfonat; sulfonierten Sulfonpolymeren mit $-SO_3X_a$-Gruppen, wobei $X_a$ H oder ein Metall ist, einschließlich sulfonierter Polysulfone, sulfonierter Polyphenylsulfone, sulfonierter Polyethersulfone; Polysuccinimide und Salze; Polyasparaginsäuren und Salze; Poly(meth)acrylsäuren und Salze (z. B. Na, K, Li); Polyvinylsulfonsäuren und Salze (z. B. Na, K, Li); und Polyvinylalkoholen.

11. Verfahren gemäß einem der vorstehenden Ansprüche, wobei das Trägermaterial in einem trockenen Zustand mit einem Feuchtegehalt von weniger als 0,5 Gew.-%, vorzugsweise weniger als 0,2 Gew.-%, bezogen auf das Gesamtgewicht des Trägermaterials, bereitgestellt wird.

12. Verfahren gemäß einem der vorstehenden Ansprüche, wobei der Schritt des Druckens von Schichten des dreidimensionalen Gegenstands aus dem Bauteilmaterial durch Drucken von Bauteilmaterial bei einer Temperatur von höchstens 300 °C durchgeführt wird.

13. Verfahren gemäß einem der vorstehenden Ansprüche, wobei das Bauteilmaterial ausgewählt ist aus der Gruppe bestehend aus amorphen Polymeren mit einer Glasübergangstemperatur, wie bestimmt gemäß ASTM E1356, von 100 bis 180 °C, und halbkristallinen Polymeren mit einem Schmelzpunkt, wie bestimmt gemäß ASTM D3418, von

100 °C bis 260 °C.

**14.** Verfahren gemäß einem der vorstehenden Ansprüche, wobei das Bauteilmaterial ausgewählt ist aus der Gruppe umfassend Polymethylmethacrylat (PMMA), Polycarbonat (PC), Acrylnitril-Butadien-Styrol (ABS), Polyamiden, einschließlich insbesondere Polyamid 6, Polyamid 11, Polyamid 610, Polyamid 612, Polyamid 510, Polyamid 1010, Polyamid 1012, Polyamid 1212, Polyamid MXD6, Polyamid 66, Polyamid 106, Polyamid 12 und ihre Copolyamide, Polyester, einschließlich insbesondere Polybutylenterephthalat (PBT), Polytrimethylenterephthalat (PTT), Polyethylenterephthalat (PET), Polymilchsäure (PLA), Polyolefine, einschließlich insbesondere Polyethylen (PE) und Polypropylen (PP), Polyvinylidenfluorid (PVDF), Polyetherimid (PEI), thermoplastische Elastomere (TPE) und thermoplastisches Polyurethan (TPU).

**15.** Verfahren gemäß einem der vorstehenden Ansprüche, wobei das additive Fertigungssystem ein additives Fertigungssystem auf Extrusionsbasis, auch als Fused-Filament-Fertigungsverfahren bekannt, ist.

**Revendications**

**1.** Procédé pour la fabrication d'un objet tridimensionnel avec un système de fabrication additive, comprenant :

- la fourniture d'un matériau de support comprenant plus de 50 % en poids d'au moins un polyamide semi-cristallin possédant un point de fusion ($T_m$), tel que déterminé selon la norme ASTM D3418, allant de 100 °C jusqu'à moins de 250 °C, le polyamide, lorsqu'il est immergé dans l'eau à une concentration de 250 g/l, étant soluble dans l'eau, étant dispersé dans l'eau ou étant gonflé par l'eau avec une absorption d'eau à saturation d'au moins 25 % en poids, sur la base du poids initial du polyamide ;
- la fourniture d'un matériau de pièce ;
- l'impression de couches d'une structure de support à partir du matériau de support fourni, et l'impression de couches de l'objet tridimensionnel à partir du matériau de pièce fourni en coordination avec l'impression des couches de la structure de support pour fournir un assemblage de structure de support et d'objet tridimensionnel, au moins une partie des couches imprimées de la structure de support supportant les couches imprimées de l'objet tridimensionnel ; et
- l'élimination d'au moins une partie de la structure de support de l'assemblage de sorte à obtenir l'objet tridimensionnel.

**2.** Procédé selon la revendication 1, le polyamide comprenant de 60 % en moles à 100 % en moles de motifs répétitifs représentés par la formule (I) :

-- **C(O)-A-C(O)-NH-X-NH-** **(I),**

A représentant un groupe à base d'hydrocarbure divalent choisi parmi au moins l'un parmi des composés aliphatiques saturés ou insaturés, des composés cycloaliphatiques saturés ou insaturés, des composés aromatiques comprenant au moins 5 atomes de carbone, des composés arylaliphatiques et des composés alkylaromatiques, et
X représentant, indépendamment, un groupe divalent d'au moins une parmi les formules II, III, IV et V

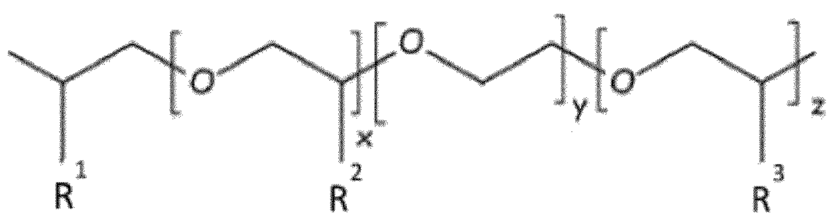

II

I ou éthynyle, x et z étant zéro ou des entiers, et y étant un entier, à la condition que x + y + z soit un entier allant de 1 à 15 ;

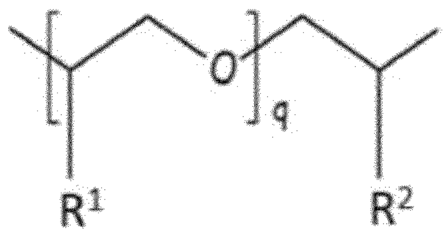

III

$R^1$ et $R^2$, indépendamment, étant méthyle, éthyle, éthényle ou éthynyle, et q étant un entier allant de 1 à 15 ;

$-B'-O-[B''-O-]_k-B'''-$ IV

B', B'' et B''' étant identiques ou différents les uns des autres et représentant un groupe alkylène linéaire ou ramifié possédant de 2 à 6 atomes de carbone, et
k étant de 0 à 3 ;

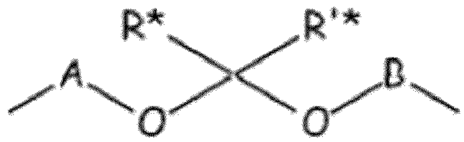

V

R* et R'*, identiques ou différents l'un de l'autre, étant indépendamment hydrogène, un groupe $C_{1-3}$ alkyle ;
A et B, indépendamment, étant alcanediyle, alcènediyle, alkdiènediyle, alcanediyle-Het-alcanediyle, Het représentant un hétéroatome différent de l'oxygène, alcanediyle-hétérocyclodiyle- alcanediyle, alcanediyle-oxy-alcanediyle, ou pipérazine substituée par 1,4-alcanediyle.

**3.** Procédé selon la revendication 2, X représentant un groupe divalent parmi au moins l'une des formules II, III et IV,

x, y, z de la formule II étant identiques ou différents les uns des autres, x et z, indépendamment, étant zéro, 1, 2 ou 3, y étant 1, 2 ou 3, à condition que x + y + z soit un entier de 1 à 5, et $R^1$, $R^2$ et $R^3$ de la formule II, indépendamment, étant méthyle ou éthyle, ou
$R^1$ et $R^2$ de la formule III, indépendamment, étant méthyle ou éthyle, et q étant un entier allant de 1 à 5, ou
B', B'' et B''' étant identiques ou différents les uns des autres et représentant un groupe alkylène linéaire possédant de 2 à 4 atomes de carbone, et k étant de 0 à 2.

**4.** Procédé selon la revendication 2 ou 3, X représentant un groupe divalent de formule IV, B', B'' et B''' représentant des groupes alkylène linéaires possédant, indépendamment, 2 ou 3 atomes de carbone, et k étant 0 ou 1.

**5.** Procédé selon l'une quelconque des revendications 2 à 4, X représentant l'une ou l'autre des formules VI à VIII

**$-(CH_2)_2-O-(CH_2)_2-O-(CH_2)_2-$ (VI)**

**$-(CH_2)_3-O-(CH_2)_2-O-(CH_2)_3-$ (VII)**

**$-(CH_2)_2-O-(CH_2)_2-$ (VIII).**

**6.** Procédé selon l'une quelconque des revendications 2 à 5, A représentant l'un ou plusieurs du groupe constitué par des groupes alcanediyle linéaires ou ramifiés, des groupes alcènediyle linéaires ou ramifiés, des groupes alcynediyle linéaires ou ramifiés, des groupes cycloalcanediyle, des groupes cycloalcènediyle, des groupes cycloalcynediyle, des groupes arylène comprenant au moins 5 atomes de carbone, des groupes arylalcanediyle, des groupes arylcycloalcanediyle et des groupes alkylarylènediyle.

**7.** Procédé selon l'une quelconque des revendications 2 à 6, A représentant un groupe alkylène linéaire ou ramifié possédant de 1 à 10 atomes de carbone.

8. Procédé selon l'une quelconque des revendications 2 à 7, A représentant un groupe alkylène linéaire possédant 4 atomes de carbone et X représentant le groupe de formule VI.

9. Procédé selon l'une quelconque des revendications précédentes, le polyamide étant un produit de condensation d'au moins un mélange comprenant au moins un diacide [acide (DA)] (ou un dérivé correspondant) et au moins une diamine [amine (NN)] (ou des dérivés correspondants).

10. Procédé selon l'une quelconque des revendications précédentes, le matériau de support comprenant au moins un additif polymérique soluble dans l'eau différent du polyamide, qui est généralement choisi dans le groupe constitué par des polymères de type polyéthylèneglycol (PEG) ; des polymères de type polyvinylpyrrolidone (PVP) ; des polymères de type poly(sulfonates de méthylènenaphtalène) (obtenus par sulfonation de naphtalène, condensation avec du formaldéhyde et neutralisation) ; des polymères de type sulfonate de styrène possédant des groupes -$SO_3X_a$, $X_a$ étant H ou un métal, par ex. Na, K, Li, y compris des poly(sulfonates de styrène) et des copolymères de styrène-co-sulfonate de styrène ; des polymères de sulfone sulfonée possédant des groupes -$SO_3X_a$, $X_a$ étant H ou un métal, y compris des polysulfones sulfonées, des polyphénylsulfones sulfonées, des polyéthersulfones sulfonées ; des polysuccinimides et des sels ; des poly(acides aspartiques) et des sels ; des poly(acides (méth)acryliques) et des sels (par ex. Na, K, Li) ; des poly(acides vinylsulfoniques) et des sels (par ex. Na, K, Li) ; et des poly(alcools vinyliques).

11. Procédé selon l'une quelconque des revendications précédentes, le matériau de support étant fourni dans un état solide, possédant une teneur en humidité inférieure à 0,5 % en poids, préférablement inférieure à 0,2 % en poids, sur la base du poids total du matériau de support.

12. Procédé selon l'une quelconque des revendications précédentes, l'étape d'impression de couches de l'objet tridimensionnel à partir du matériau de pièce étant mise en œuvre en imprimant le matériau de pièce à une température d'au plus 300 °C.

13. Procédé selon l'une quelconque des revendications précédentes, le matériau de pièce étant choisi dans le groupe constitué par des polymères amorphes possédant une température de transition vitreuse, telle que déterminée selon la norme ASTM E1356, allant de 100 à 180 °C, et des polymères semis-cristallin possédant un point de fusion, tel que déterminé selon la norme ASTM D3418, allant de 100 °C à 260 °C.

14. Procédé selon l'une quelconque des revendications précédentes, le matériau de pièce étant choisi dans le groupe comprenant un poly(méthacrylate de méthyle) (PMMA), un polycarbonate (PC), un acrylonitrile butadiène styrène (ABS), des polyamides, y compris notamment un polyamide 6, un polyamide 11, un polyamide 610, un polyamide 612, un polyamide 510, un polyamide 1010, un polyamide 1012, un polyamide 1212, un polyamide MXD6, un polyamide 66, un polyamide 106, un polyamide 12 et leurs copolyamides, un polyester, y compris notamment un poly(téréphtalate de butylène) (PBT), un poly(téréphtalate de triméthylène) (PTT), un poly(téréphtalate d'éthylène) (PET), un poly(acide lactique) (PLA), des polyoléfines, y compris notamment un polyéthylène (PE) et un polypropylène (PP), un poly(fluorure de vinylidène) (PVDF), un polyétherimide (PEI), des élastomères thermoplastiques (TPE) et un polyuréthane thermoplastique (TPU).

15. Procédé selon l'une quelconque des revendications précédentes, le système de fabrication additive étant un système de fabrication additive à base d'extrusion, également appelée technique de fabrication à filaments fusionnés.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 62564616
- WO 9960508 A
- US 20150028523 A
- WO 2017112689 A1, Stratasys
- US 5324812 A
- WO 2013007128 A
- WO 9724388 A
- WO 9964496 A
- WO 2013007585 A1